# EUROPÄISCHE PATENTSCHRIFT

(11) **EP 1 270 175 B1**
(45) Veröffentlichungstag und Bekanntmachung des Hinweises auf die Patenterteilung: **26.07.2006**
(21) Anmeldenummer: 02012158.8
(22) Anmeldetag: 01.06.2002
(51) Int. Cl.: B29C 47/16

(54) **Extrusionsdüse**
Extrusion die
Filière d'extrusion

(30) Priorität: 20.06.2001 DE 10129627; 10.08.2001 DE 20113293 U
(43) Veröffentlichungstag der Anmeldung: 02.01.2003
(73) Patentinhaber: Reifenhäuser GmbH & Co. Maschinenfabrik, 53839 Troisdorf (DE)
(72) Erfinder: Rübhausen, Anton, 53859 Niederkassel (DE)
(74) Vertreter: Müller-Gerbes, Margot

(56) Entgegenhaltungen:
- EP-A- 0 668 143
- DE-U- 20 004 784
- US-A- 3 267 519

## Beschreibung

Die Erfindung betrifft eine Extrusionsdüse mit einem ersten Düsenteil und einem zweiten Düsenteil, die jeweils eine Düsenlippe aufweisen, zwischen denen ein Extrusionsspalt mit einer sich über die Breite der Extrusionsdüse erstreckenden schlitzförmigen Austrittsöffnung ausgebildet ist, wobei mindestens ein Düsenteil mit einer Verstelleinrichtung ausgebildet ist, mittels derer die Düsenlippe relativ zur Düsenlippe des anderen Düsenteils unter Veränderung der Weite der Austrittsöffnung verstellbar ist und die Verstelleinrichtung einen Verstellbalken umfaßt, der in einer in Breitenerstreckung des Düsenteiles verlaufenden Verschieberichtung verschieblich in einer Aufnahmenut des Düsenteiles geführt ist und der mindestens einen seitlich über den Verstellbalken hervorkragenden Gleitnocken aufweist und jeder Gleitnocken in einer Steuernut des Düsenteils geführt ist, wobei die Steuernut schräg zur Verschieberichtung des Verstellbalkens verlaufend angeordnet ist, so daß bei einer Verschiebung des Verstellbalkens in Verschieberichtung durch den Eingriff des mindestens einen Gleitnockens in die Steuernut eine hierzu quer verlaufende Verstellung der Düsenlippe bewirkbar ist.

Derartige Extrusionsdüsen werden aufgrund der sich über die Breite der Extrusionsdüse erstreckenden schlitzförmigen Austrittsöffnung häufig auch als Breitschlitzdüsen bezeichnet und zur Extrusion von Flachfolien, -tafeln und - platten sowie zum Extrusionsbeschichten verwendet.

Während die Breite der aus der Extrusionsdüse extrudierten Folie, Platte, Tafel oder Beschichtung auf Basis thermoplastischer Kunststoffe durch die Breite der Austrittsöffnung festgelegt ist, werden Verstelleinrichtungen vorgesehen, mittels derer die Weite der Austrittsöffnung, d. h. die Dimension senkrecht zur Breite der Extrusionsdüse verändert werden kann, um die Schichtdicke des aus der Extrusionsdüse austretenden Kunststoffstranges zu verändern.

Aus der US-A-3267519 ist eine Verstelleinrichtung für Düsenlippen von Rund- oder Breitschlitzdüsen bekannt, bei der eine Vielzahl von in ein Düsenteil starr eingeschraubten Bolzen mit Stellschrauben und Kontermuttern versehen werden, welche ihrerseits am weiteren Düsenteil in der Weise angreifen, daß durch Verstellung der Position der Stellschrauben und Kontermuttern eine Grob- bzw. Feinverstellung eines örtlichen Bereiches des Düsenspaltes bewirkbar ist.

Eine gattungsgemäße Verstelleinrichtung mit einem in Breitenerstreckung der Extrusionsdüse verschiebbar gelagerten Verstellbalken, dessen vorstehende Gleitnocken in Steuernuten des Düsenteils eingreifen, um eine Verstellung der Weite der Austrittsöffnung zu bewirken, ist aus der DE 94 22 051 U1 und EP 0 668 143 B1 bekannt. Hierbei handelt es sich um eine sogenannte Flexlippe, bei der die zu verstellende Düsenlippe flexibel biegbar am Düsenteil befestigt ist und mittels der Verstelleinrichtung zur Einstellung der Austrittsöffnung mehr oder weniger stark in Richtung der anderen Düsenlippe abgebogen wird. Bei dieser bekannten Ausführungsform wird der Verstellbalken unmittelbar verschieblich in einer entsprechenden Aufnahmenut des Düsenteils geführt und auch die vorstehenden bzw. hervorkragenden Gleitnocken sind unmittelbar in entsprechenden Steuernuten geführt. Hierbei hat es sich jedoch in der Praxis gezeigt, daß durch diese unmittelbare Führung des Verstellbalkens und der Gleitnocken in der entsprechenden Aufnahmenut bzw. den Steuernuten hohe Reibungskräfte entstehen, die zur Sicherstellung einer ordnungsgemäßen Funktion eine gleichmäßige und gute Schmierung der aneinander abgleitenden Flächen benötigt, was einerseits sehr wartungsaufwendig ist und andererseits über einen längeren Benutzungszeitraum nicht immer aufrechterhalten werden kann und zu erhöhtem Verschleiß der Verstelleinrichtung führt. Dies führt in der Gebrauch der bekannten Verstelleinrichtung und/oder großen Abmessungen der Extrusionsdüse die Betätigungskräfte zum Bewirken der gewünschten Verstellbewegung über sinnvolle und beherrschbare Grenzwerte hinaus ansteigen.

Die Erfindung hat sich von daher die Aufgabe gestellt, eine Extrusionsdüse mit einer Verstelleinrichtung der eingangs genannten Art dahingehend weiterzubilden, daß auch im Dauerbetrieb und/oder bei großen Extrusionsdüsenabmessungen bei verringertem Wartungsaufwand eine leichtgängige und zuverlässige Verstellung der Düserilippen bewerkstelligt werden kann, wobei insbesondere auch eine leichte Verstellung während des Betriebs möglich sein soll.

Zur Lösung der gestellten Aufgabe wird die Weiterbildung einer gattungsgemäßen Extrusionsdüse mit den kennzeichnenden Merkmalen des Patentanspruches 1 vorgeschlagen.

Vorteilhafte Ausgestaltungen und Weiterbildungen der Erfindung sind Gegenstand der Unteransprüche.

Die erfindungsgemäße Lösung der gestellten Aufgabe besteht darin, daß der Verstellbalken und/oder der mindestens eine Gleitnocken des Verstellbalkens jeweils unter Zwischenlage einer Rollenkette innerhalb der Aufnahmenut bzw. Steuernut angeordnet sind.

Auf diese Weise wird das unmittelbare Abgleiten des Verstellbalkens bzw. seiner hervorkragenden Gleitnocken in der Aufnahmenut bzw. den Steuernuten des Düsenteils vermieden und vielmehr die gewünschte Beweglichkeit durch die Rollenketten hergestellt. Diese Rollenketten, die bevorzugt sowohl zwischen Verstellbalken und Aufnahmenut als auch zwischen Gleitnocken und Steuernuten angeordnet werden, stellen eine leichtgängige Verschiebbarkeit des Verstellbalkens und eine daraus resultierende leichtgängige Verstellung der Weite der Austrittsöffnung der erfindungsgemäßen Extrusionsdüse auch bei großen Abmessungen derselben und/oder über große Verstellwege sicher.

Die erfindungsgemäß ausgebildete rollenkettengelagerte Verstelleinrichtung mit zwischen Verstellbalken und Aufnahmenut und/oder zwischen hervorkragenden Gleitnocken und Steuernuten angeordneten Rollenketten kann bei verschiedenen bekannten Bauformen sogenannter Breitschlitzextrusionsdüsen angewendet werden.

Gemäß einer Ausführungsform der erfindungsgemäßen Extrusionsdüse ist diese mit einer sogenannten Verstellippe ausgebildet, wobei das die Verstelleinrichtung aufweisende Düsenteil mehrteilig mit einem Düsenrückteil und einem vorderseitig an diesem angebrachten und die Düsenlippe umfassenden Düsenvorderteil ausgebildet ist, welches mittels der Verstelleinrichtung gegenüber dem Düsenrückteil unter Veränderung der Weite der Austrittsöffnung des Extrusionsspaltes verschiebbar ist. Eine Verstellung des Extrusionsspaltes durch eine verschiebbare Werkzeuglippe bietet zudem, im Gegensatz zur Verstellung mittels flexibel angebundener Werkzeuglippen, den Vorteil, daß die formgebenden Fließoberflächen des Extrusionsspaltes über dem gesamten Einstellbereich zueinander parallel bleiben. Mit einer solchermaßen ausgebildeten Extrusionsdüse mit Verstellippe lassen sich insbesondere große Verstellbereiche und damit große einstellbare Bereiche für die Weite der Austrittsöffnung des Extrusionsspaltes einstellen, wobei die Verstellkräfte durch die erfindungsgemäßen Rollenketten gleichwohl niedrig gehalten werden.

Es ist insbesondere möglich, die erfindungsgemäße Extrusionsdüse während des kontinuierlichen Betriebs derselben den Anforderungen entsprechend zu verstellen. Bevorzugt ist hierbei die Aufnahmenut zur Aufnahme des Verstellbalkens im Düsenrückteil ausgebildet und zum Düsenvorderteil hin offen und die Steuernuten zur Aufnahme der Gleitnocken des Verstellbalkens sind im Düsenvorderteil auf der am Düsenrückteil anliegenden Seite ausgebildet. Diese Ausführungsform ist jedoch keineswegs zwingend und kann auch abgewandelt werden, beispielsweise indem der Verstellbalken in einer Aufnahmenut im Düsenvorderteil angebracht ist, während die die hervorkragenden Gleitnocken aufnehmenden Steuernuten im Düsenrückteil angebracht sind. Auch ist es möglich, anstelle von hervorkragenden Gleitnocken im Verstellbalken diesen mit Steuernuten auszubilden, in die entsprechend hervorkragende Gleitnocken am Düsenvorderteil oder Düsenrückteil eingreifen.

Eine andere mögliche Ausführungsform der erfindungsgemäßen Extrusionsdüse sieht vor, diese in der sogenannten Flexlippenbauweise auszubilden, bei der das die Verstelleinrichtung aufweisende Düsenteil eine flexible biegbar an diesem angeordnete Düsenlippe aufweist und mittels der Verstelleinrichtung eine Biegung der Düsenlippe unter Veränderung der Größe der Austrittsöffnung der Extrusionsdüse bewirkbar ist. Solche Flexlippenextrusionsdüsen sind vielfältig bekannt, wozu lediglich beispielhaft auf die bereits eingangs erwähnten Druckschriften DE 94 22 051 U1 und EP 0 668 143 B1 verwiesen wird.

Wesentlich für die Funktion der erfindungsgemäßen Extrusionsdüse ist die Beschaffenheit der Rollenketten, die zwischen Verstellbalken und Aufnahmenut und/oder zwischen Gleitnocken und Steuernuten angeordnet sind.

Bevorzugt sind diese Rollenketten endlos umlaufend ausgebildet, so daß über den gesamten Verstellbereich der erfindungsgemäßen Extrusionsdüse deren reibungsvermindernde und funktionsfördernde Eigenschaft zuverlässig zur Verfügung steht.

Eine im Rahmen der Erfindung vorgeschlagene Ausführungsform der Rollenketten sieht vor, daß jeweils eine Vielzahl von in den Seitengliedern drehbar gelagerten Rollen vorgesehen ist, auf welchen der Verstellbalken in der Aufnahmenut bzw. der mindestens eine Gleitnocken in der zugehörigen Steuernut relativ zueinander abrollen und diese Vielzahl von in den Seitengliedern drehbar gelagerten Rollen an ihren jeweiligen Enden mittels weiterer Seitenglieder in an sich bekannter Weise miteinander verkettet sind.

Um eine ausreichende Stabilität der Rollenketten der erfindungsgemäßen Extrusionsdüse sicherzustellen, können bereichsweise zwischen benachbarten Rollen jeweils die Seitenglieder der Rollenkette verbindende Verbindungsbrücken vorgesehen sein.

Um die zu erwartenden hohen Verstellkräfte dauerhaft aufnehmen zu können, werden die Rollenketten bevorzugt aus einem geeigneten gehärteten Stahl oder anderen für die Belastung geeigneten Werkstoffen gefertigt.

Mit der erfindungsgemäß ausgebildeten Extrusionsdüse ist es möglich, die Weite der Austrittsöffnung bis zu 12 mm zu verstellen.

Selbstverständlich können im Rahmen der Erfindung auch andere Kettenformen zum Einsatz kommen.

Weitere Einzelheiten der erfindungsgemäßen Extrusionsdüse werden nachfolgend anhand der lediglich ein Ausführungsbeispiel darstellenden Zeichnung näher erläutert. Es zeigen:
- Figur 1: in schematisierter Darstellung die Seitenansicht eines erfindungsgemäßen Extrusionswerkzeuges,
- Figur 2: die Ansicht gemäß Pfeil T in Figur 1 auf das Extrusionswerkzeug in teilweise geschnittener Ansicht,
- Figur 3: eine Aufsicht auf eine Rollenkette der erfindungsgemäßen Extrusionsdüse,
- Figur 4: in perspektivischer Darstellung Einzelteile der Rollenkette gemäß Figur 3,
- Figur 5: die Seitenansicht der Rollenkette gemäß Figur 3.

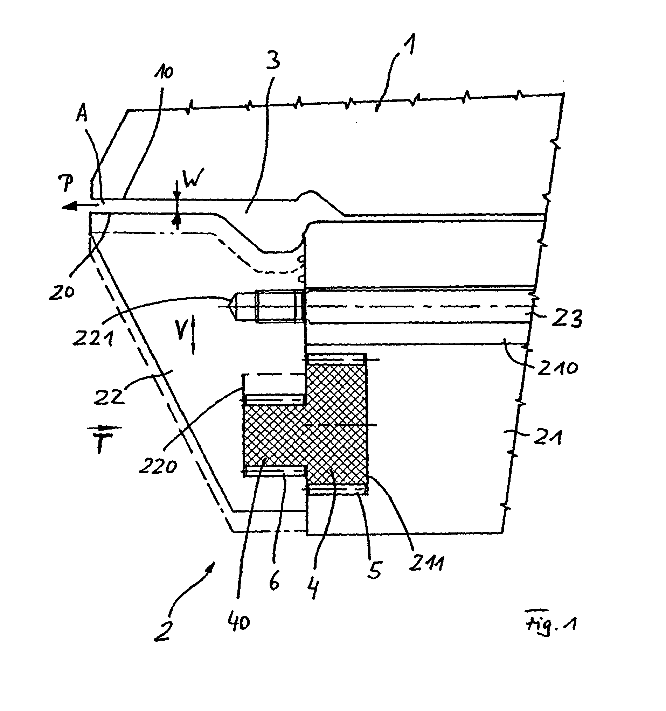

In der Figur 1 ist eine Extrusionsdüse dargestellt, die häufig auch als Breitschlitzextrusionsdüse bezeichnet wird und die unter anderem zur Extrusion von Flachfolien, -tafeln, -platten sowie zur Extrusionsbeschichtung unter Einsatz von in einer Extrusionseinrichtung aufgeschmolzenem thermoplastischem Kunststoff eingesetzt wird.

Die Extrusionsdüse umfaßt ein erstes oder oberes Düsenteil 1 sowie ein zweites oder unteres Düsenteil 2, zwischen denen ein Extrusionsspalt 3 ausgebildet ist, durch welchen die von einer nicht dargestellten Extrusionseinrichtung zur Verfügung gestellte Schmelze des thermoplastischen Kunststoffes zu einer Austrittsöffnung A geleitet und von dort gemäß Pfeil P aus der Extrusionsdüse austritt. Die Austrittsöffnung A ist schlitzförmig ausgebildet und erstreckt sich über die gesamte Breite des Extrusionswerkzeuges.

Um die Größe der Austrittsöffnung A verändern zu können, kann die Weite W derselben verändert werden. Zu diesem Zweck ist eine Verstelleinrichtung vorgesehen, die nachfolgend noch näher erläutert wird und mittels derer die die Austrittsöffnung A begrenzenden Düsenlippen 10, 20 des ersten Düsenteils 1 bzw. zweiten Düsenteils 2 in ihrem Abstand zueinander, der gleichzeitig die Weite W bildet, verändert werden können.

Zur Ausbildung dieser Verstelleinrichtung ist das zweite und hier untere Düsenteil 2 mehrteilig ausgebildet und umfaßt ein Düsenrückteil 21, an dessen Vorderseite ein die Düsenlippe 20 tragendes Düsenvorderteil 22 angeordnet. Zu diesem Zweck sind eine Vielzahl von Spannbolzen 23 vom Düsenrückteil 21 her durch eine entsprechende Bohrung 210 in diesem in eine Gewindesacklochbohrung 221 im Düsenvorderteil 22 eingeschraubt und erzeugen eine zur Abdichtung der Fuge zwischen Düsenrückteil 21 und Düsenvorderteil 22 notwendige Flächenpressung.

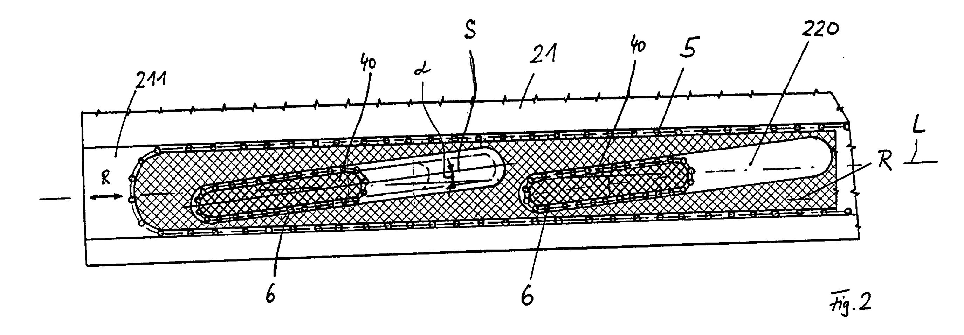

Unterhalb der Bohrungen 210 für den Durchtritt der Spannbolzen 23 weist das Düsenrückteil 21 eine zum Düsenvorderteil 22 hin offene Aufnahmenut 211 mit rechteckigem Querschnitt auf, in die ein Verstellbalken 4 eingesetzt ist, der sich ebenso wie die Aufnahmenut 211 in Breitenerstreckung der Extrusionsdüse erstreckt, siehe hierzu auch Figur 2. Der Verstellbalken 4 ist hierbei unter Zwischenlage einer endlos umlaufenden Rollenkette 5 innerhalb der Aufnahmenut 211 gelagert, so daß er gemäß Pfeilen R in einer Verschieberichtung, die sich in Breitenerstreckung des Extrusionswerkzeuges erstreckt, längsverschieblich innerhalb der Aufnahmenut 211 geführt ist. Diese Längsverschieblichkeit kann beispielsweise durch eine nicht näher dargestellte und ebenfalls in Breitenerstreckung der Extrusionsdüse verlaufende und am Verstellbalken 4 angreifende Gewindespindel bewirkt werden.

Aus den Darstellungen gemäß Figur 1 und Figur 2 ist ferner ersichtlich, daß der Verstellbalken 4 an seiner dem Düsenvorderteil 22 zugewandten Seite mehrere parallel zueinander verlaufende und voneinander beabstandete hervorkragende Gleitnocken 40 aufweist, die über die Kontur des Düsenrückteiles 21 hervorstehen. Die Gleitnocken 40 weisen eine Mittellängsachse S auf, die schräg zur Längsachse L des Verstellbalkens 4 und der diese aufnehmenden Aufnahmenut 211 verläuft, hier beispielsweise unter einem Winkel α von 5°.

Die hervorkragenden Gleitnocken 40 des Verstellbalkens 4 sind in entsprechend ausgebildeten Steuernuten 220 geführt, die im Düsenvorderteil 22 ausgehend von der dem Düsenrückteil 21 zugewandten Oberfläche her eingebracht sind, wie ebenfalls der Darstellung gemäß Figur 2 entnehmbar. Auch diese Steuernuten 220 sind analog zu den Gleitnocken 40 des Verstellbalkens 4 mit gleichem Winkel α schräg zur Längsachse L des Verstellbalkens 4 und der Aufnahmenut 211 angeordnet.

Auch die innerhalb der Steuernuten 220 aufgenommenen und geführten Gleitnocken 40 sind unter Zwischenlage jeweils einer endlos um den Gleitnocken umlaufenden Rollenkette 6 innerhalb der Steuernut 220 geführt.

Durch diese vorangehend erläuterte Ausgestaltung der Extrusionsdüse ist es möglich, eine Längsbewegung des Verstellbalkens 4 gemäß Pfeil R in Richtung der Längsachse L in eine hierzu senkrechte Bewegung in Pfeilrichtung V gemäß Figur 1 des Düsenvorderteils 22 relativ zum Düsenrückteil 21 zu transformieren, da die hervorkragenden Gleitnocken 40 kontinuierlich innerhalb der Steuernuten 220 geführt werden und mittels der Rollenketten 6 an dieser wälzen. Der Grad der aus der Verschiebung des Verstellbalkens 4 in Pfeilrichtung R resultierenden vertikalen Bewegung in Pfeilrichtung V ist hierbei abhängig vom Winkel α zwischen der Längsachse S der Gleitnocken 40 sowie der Steuernuten 220 in bezug auf die Längsachse L des Verstellbalkens 1 und der Aufnahmenut 211.

In der Folge des vertikalen Verfahrens des Werkzeugvorderteiles 22 durch Bewegung des Verstellbalkens 4 in Pfeilrichtung R kann somit der Abstand der am Düsenvorderteil 22 ausgebildeten Düsenlippe 20 relativ zur Düsenlippe 10 des Düsenteils 1 variiert werden, wodurch die Weite W der Austrittsöffnung A der Extrusionsdüse auf einfache Weise verändert wird.

Da die gesamte Führung des Verstellbalkens 4 innerhalb der Aufnahmenut 211 sowie der hervorkragenden Gleitnocken 40 innerhalb der Steuernuten 220 mittels der Rollenketten 5, 6 erfolgt, über die sämtliche Kräfte vom Verstellbalken 4 und den Gleitnocken 40 in das Düsenrückteil 21 bzw. Düsenvorderteil 22 eingeleitet werden, kann diese Verstellbewegung auch bei großen Abmessungen der Extrusionsdüse und/oder hohen Preßdrücken zwischen Düsenrückteil 21 und Düsenvorderteil 22 aufgrund der Spannbolzen 22 und/oder hohem Druck der thermoplastischen Kunststoffschmelze im Fließkanal 3 mit einem geringen Kraftaufwand und auch im Dauerbetrieb nahezu verschleiß- und wartungsfrei durchgeführt werden. Durch eine entsprechende großzügige Dimensionierung der Bohrungen 210 für den Durchtritt der Spannbolzen 23 wird eine ausreichende Bewegungsmöglichkeit des mittels der Spannbolzen 23 am Düsenrückteil 21 befestigten Vorderteils ermöglicht.

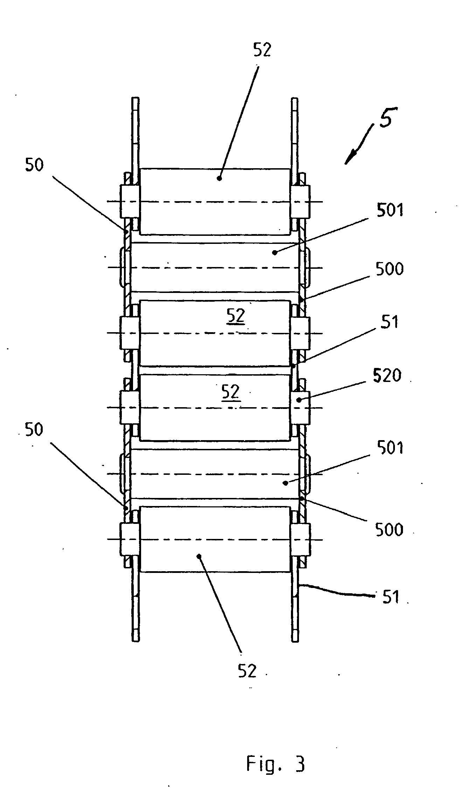

Die vorangehend erläuterten Rollenketten 5, 6 sind bevorzugt gleichartig aufgebaut, können jedoch auch unterschiedlich dimensioniert sein. Im folgenden wird stellvertretend für beide Rollenketten 5, 6 der weitere Aufbau derselben am Beispiel der in den Figuren 3 bis 5 erläuterten Rollenkette 5 erläutert, die Ausführungen sind analog auch auf die Rollenkette 6 übertragbar. Die im folgenden beschriebene Rollenkette ist lediglich ein mögliches Ausführungsbeispiel, mit dem eine Rollenlagerung der Bauteile im Sinne der Erfindung verwirklicht werden kann.

Als Rollenkette im Sinne der Erfindung sind ebenso alternative Ausführungen möglich, die die gewünschte Funktion einer endlosen Reihung paralleler Rollen, welche einzeln frei drehbar sind, erfüllen, z. B. flexibler Blechkäfig, gelenkig verbundener Blechkäfig.

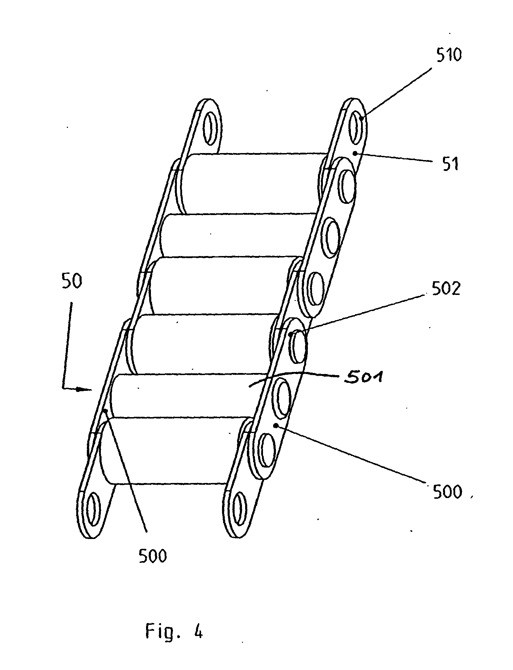

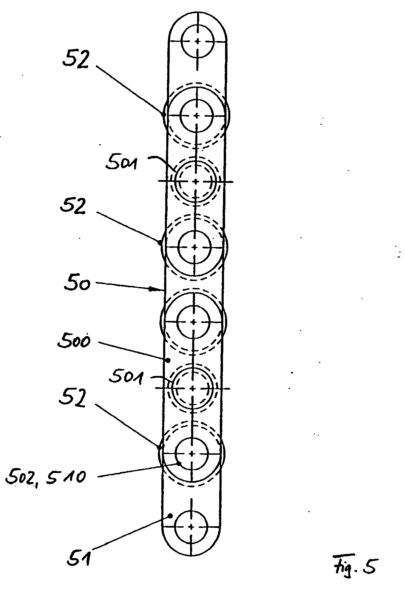

Wie aus der Aufsicht gemäß Figur 3 ersichtlich, besteht die Rollenkette 5 aus einer Vielzahl von sich parallel zueinander erstreckenden Rollen 52, auf denen der Verstellbalken 4 bzw. die Gleitnocken 40 innerhalb der Aufnahmenut 211 bzw. Steuernut 220 abrollen. Jede dieser Rollen 52 besitzt stirnseitige Lagerzapfen 520, welche in den Seitengliedern 51 und 500 drehbar gelagert sind. Die Rollen sind abwechselnd mittels Seitengliedern 51 bzw. 500 eines Kettentraggliedes 50 zu der Rollenkette verkettet, wozu die Seitenglieder 51 bzw. 500 des Traggliedes 50 entsprechende, die freien Enden der Tragachsen 520 aufnehmende und miteinander kommunizierende Bohrungen 510, 502 aufweisen, siehe hierzu Figur 4. Im Wechsel zwischen aufeinanderfolgenden Seitengliedern 51 ist hierbei jeweils ein Tragglied 50 vorgesehen, welches in näheren Einzelheiten auch aus der Figur 4 ersichtlich ist. Neben den mit den Seitengliedern 51 zusammenwirkenden Seitengliedern 500 weist jedes dieser Tragglieder 50 eine Verbindungsbrücke 501 auf, die zwischen zwei aufeinanderfolgenden Rollen 52 die beiden beidseits der Rollenkette 5 liegenden Seitenglieder 500 des Traggliedes 50 miteinander verbindet, was der Rollenkette 5 eine hohe Stabilität verleiht. Die Verbindungsbrücke 501 ist hierbei in ihrem Durchmesser kleiner als die Rollen 52 ausgeführt, so daß sie nicht mit dem Verstellbalken 4 und der Aufnahmenut 211 bzw. dem Gleitnocken 40 und der Steuernut 220 in Berührung kommt, siehe hierzu auch Figur 5.

Es versteht sich, daß die Rollenkette 5 ebenso wie die analog aufgebaute Rollenkette 6 aus einem entsprechend den Anforderungen ausgewählten verschleißbeständigen Material, beispielsweise gehärtetem Stahl hergestellt ist.

Neben der in den Zeichnungen dargestellten Ausführungsform einer Extrusionsdüse mit Verstellippe, d. h. mit einem an einem Düsenrückteil 21 angebrachtem Düsenvorderteil 22, welches die Düsenlippe 20 trägt, ist selbstverständlich auch die Anwendung eines rollenkettengelagerten Verstellbalkens 4 mit vorstehenden Gleitnocken und diese aufnehmenden Steuernuten in einer Extrusionsdüse mit sogenannter Flexlippe, bei dem die Düsenlippe flexibel biegbar am Düsenteil befestigt ist, möglich.

## Patentansprüche

1. Extrusionsdüse mit einem ersten Düsenteil (1) und einem zweiten Düsenteil (2), die jeweils eine Düsenlippe (10, 20) aufweisen, zwischen denen ein Extrusionsspalt mit einer sich über die Breite der Extrusionsdüse erstrekkenden schlitzförmigen Austrittsöffnung (A) ausgebildet ist, wobei mindestens ein Düsenteil (1, 2) mit einer Verstelleinrichtung ausgebildet ist, mittels derer die Düsenlippe (10, 20) relativ zur Düsenlippe (20, 10) des anderen Düsenteils (2, 1) unter Veränderung der Weite (W) der Austrittsöffnung (A) verstellbar ist und die Verstelleinrichtung einen Verstellbalken (4) umfaßt, der in einer in Breitenerstreckung des Düsenteiles (1, 2) verlaufenden Verschieberichtung (R) verschieblich in einer Aufnahmenut (211) des Düsenteiles (1, 2) geführt ist und der mit mindestens einem in einer Steuernut (220) geführten Gleitnocken (40) zusammenwirkt, wobei die Steuernut (220) schräg zur Verschieberichtung (R) des Verstellbalkens (4) verlaufend angeordnet ist, so daß bei einer Verschiebung des Verstellbalkens (4) in Verschieberichtung(R) durch den Eingriff des mindestens einen Gleitnockens (40) in die Steuernut (220) eine hierzu quer verlaufende Verstellung der Düsenlippe (10, 20) bewirkbar ist, **dadurch gekennzeichnet, daß** der Verstellbalken (4) und/oder der mindestens eine Gleitnocken (40) des Verstellbalkens (4) jeweils unter Zwischenlage einer Rollenkette (5, 6) innerhalb der Aufnahmenut (211) bzw. Steuernut (220) des Düsenteils (2) angeordnet sind.

2. Extrusionsdüse nach Anspruch 1, **dadurch gekennzeichnet, daß** das die Verstelleinrichtung aufweisende Düsenteil (2) mehrteilig mit einem Düsenrückteil (21) und einem vorderseitig an diesem angebrachten und die Düsenlippe (20) umfassenden Düsenvorderteil (22) ausgebildet ist, welches mittels der Verstelleinrichtung gegenüber dem Düsenrückteil (21) unter Veränderung der Weite der Austrittsöffnung des Extrusionsspaltes verschiebbar ist.

3. Extrusionsdüse nach Anspruch 2, **dadurch gekennzeichnet, daß** die Aufnahmenut (211) zur Aufnahme des Verstellbalkens (4) im Düsenrückteil (21) ausgebildet und zum Düsenvorderteil (22) hin offen ist.

4. Extrusionsdüse nach einem der Ansprüche 1 bis 3, **dadurch gekennzeichnet, daß** die Gleitnocken (40) seitlich über den Verstellbalken (4) hervorkragend an diesem befestigt sind und jeder Gleitnocken (40) in einer Steuernut (220) des Düsenteiles geführt ist.

5. Extrusionsdüse nach Anspruch 3 und 4, **dadurch gekennzeichnet, daß** die Steuernuten (220) zur Aufnahme der Gleitnocken (40) des Verstellbalkens (4) im Düsenvorderteil (22) auf der am Düsenrückteil (21) anliegenden Seite ausgebildet sind.

6. Extrusionsdüse nach Anspruch 3, **dadurch gekennzeichnet, daß** der Verstellbalken (4) mit Steuernuten ausgebildet ist, in die entsprechend am Düsenvorderteil (22) oder Düsenrückteil (21) hervorkragende Gleitnocken eingreifen.

7. Extrusionsdüse nach einem der Ansprüche 1 bis 6, **dadurch gekennzeichnet, daß** das die Verstelleinrichtung aufweisende Düsenteil eine flexibel biegbar an diesem angeordnete Düsenlippe aufweist und mittels der Verstelleinrichtung eine Biegung der Düsenlippe unter Veränderung der Weite der Austrittsöffnung des Extrusionsspaltes bewirkbar ist.

8. Extrusionsdüse nach einem der Ansprüche 1 bis 7, **dadurch gekennzeichnet, daß** die Rollenketten (5, 6) endlos umlaufend ausgebildet sind.

9. Extrusionsdüse nach einem der Ansprüche 1 bis 8, **dadurch gekennzeichnet, daß** die Rollenketten (5, 6) jeweils eine Vielzahl von mit Lagerzapfen (520) drehbar gelagerten Rollen (52) umfassen und die Rollen mittels Seitengliedern (500, 51) verkettet sind.

10. Extrusionsdüse nach Anspruch 9, **dadurch gekennzeichnet, daß** bereichsweise zwischen benachbarten Rollen (52) eine die Seitenglieder (500) der Rollenkette (5, 6) verbindende Verbindungsbrücke (501) vorgesehen ist.

11. Extrusionsdüse nach einem der Ansprüche 1 bis 10, **dadurch gekennzeichnet, daß** die Rollenketten (5, 6) aus gehärtetem Stahl gefertigt sind.

12. Extrusionsdüse nach einem der Ansprüche 1 bis 11, **dadurch gekennzeichnet, daß** die Weite der Austrittsöffnung des Extrusionsspaltes bis zu 12 mm verstellbar ist.

## Claims

1. An extrusion die with a first die part (1) and a second die part (2), which respectively have a die lip (10, 20), between which an extrusion gap is formed with a slot-shaped outlet opening (A) extending over the width of the extrusion die, at least one die part (1, 2) being formed with an adjusting device, by means of which the die lip (10, 20).is adjustable in relation to the die lip (20, 10) of the other die part (2, 1) while changing the width (W) of the outlet opening (A), and the adjusting device comprises an adjusting bar (4), which is guided in a receiving groove (211) of the die part (1, 2) displaceably in a direction of displacement (R) running in the extent of the width of the die part (1, 2), and which interacts with at least one sliding cam (40) guided in a control groove (220), the control groove (220) being arranged such that it runs obliquely in relation to the direction of displacement (R) of the adjusting bar (4), so that, when there is a displacement of the adjusting bar (4) in the direction of displacement (R), by the engagement of the at least one sliding cam (40) in the control groove (220) an adjustment transversely thereto of the die lip (10, 20) can be effected, **characterized in that** the adjusting bar (4) and/or the at least one sliding cam (40) of the adjusting bar (4) are arranged within the receiving groove (211) or control groove (220) of the die part (2) respectively with a roller chain (5, 6) interposed.

2. An extrusion die according to claim 1, **characterized in that** the die part (2) having the adjusting device is formed in a multipart manner with a rear die part (21) and a front die part (22), which is attached to the front side of the latter and comprises the die lip (20) and which can be displaced by means of the adjusting device with respect to the rear die part (21) while changing the width of the outlet opening of the extrusion gap.

3. An extrusion die according to claim 2, **characterized in that** the receiving groove (211) for receiving the adjusting bar (4) is formed in the rear die part (21) and is open towards the front die part (22).

4. An extrusion die according to any one of claims 1 to 3, **characterized in that** the sliding cams (40) are fastened to the adjusting bar (4) in such a way that they protrude laterally over it and each sliding cam (40) is guided in a control groove (220) of the die part.

5. An extrusion die according to claims 3 and 4, **characterized in that** the control grooves (220) for receiving the sliding cams (40) of the adjusting bar (4) are formed in the front die part (22) on the side lying against the rear die part (21).

6. An extrusion die according to claim 3, **characterized in that** the adjusting bar (4) is formed with control grooves into which sliding cams correspondingly projecting on the front die part (22) or rear die part (21) engage.

7. An extrusion die according to any one of claims 1 to 6, **characterized in that** the die part having the adjusting device has a die lip arranged on the latter in a flexibly bendable manner and the adjusting device can be used to bring about bending of the die lip while changing the width of the outlet opening of the extrusion gap.

8. An extrusion die according to any one of claims 1 to 7, **characterized in that** the roller chains (5, 6) are formed in an endlessly circulating manner.

9. An extrusion die according to any one of claims 1 to 8, **characterized in that** the roller chains (5, 6) respectively comprise a multiplicity of rollers (52) rotatably mounted by bearing pins (520), and the rollers are linked by means of side elements (500, 51).

10. An extrusion die according to claim 9, **characterized in that** a connecting bridge (501) connecting the side elements (500) of the roller chain (5, 6) is provided in certain regions between neighbouring rollers (52).

11. An extrusion die according to any one of claims 1 to 10, **characterized in that** the roller chains (5, 6) are produced from hardened steel.

12. An extrusion die according to any one of claims 1 to 11, **characterized in that** the width of the outlet opening of the extrusion gap is adjustable up to 12 mm.

## Revendications

1. Filière d'extrusion avec une première partie de filière (1) et une deuxième partie de filière (2) qui présentent respectivement une lèvre de filière (10, 20) entre lesquelles est formée une fente d'extrusion avec une ouverture de sortie (A) en forme de fente s'étendant sur la largeur de la filière d'extrusion, dans laquelle au moins une partie de filière (1, 2) est configurée avec un dispositif de réglage au moyen duquel la lèvre de filière (10, 20) peut être déplacée par rapport à la lèvre de filière (20, 10) de l'autre partie de filière (2, 1) avec changement de l'ampleur (W) de l'ouverture de sortie (A) et le dispositif de réglage comprend une barre de réglage (4) qui est guidée de manière coulissante dans une rainure de réception (211) de la partie de filière (1, 2) dans un sens de déplacement (R) s'étendant dans l'extension en largeur de la partie de filière (1, 2) et qui coopère avec au moins une came coulissante (40) guidée dans une rainure pilote (220), dans laquelle la rainure pilote (220) est disposée pour courir en oblique par rapport au sens de déplacement (R) de la barre de réglage (4), de sorte que lors d'un déplacement de la barre de réglage (4) dans le sens de déplacement (R) un réglage de la lèvre de filière (10, 20) peut être effectué grâce à l'engagement de ladite au moins une came coulissante (40) dans la rainure pilote (220), **caractérisée en ce que** la barre de réglage (4) et / ou ladite au moins une came coulissante (40) de la barre de réglage (4) sont respectivement disposées dans la rainure de réception (211) ou encore la rainure pilote (220) de la partie de filière (2) en intercalant une chaîne à rouleaux (5, 6).

2. Filière d'extrusion selon la revendication 1, **caractérisée en ce que** la partie de filière (2) présentant le dispositif de réglage est configurée en plusieurs parties avec une partie postérieure de filière (21) et une partie antérieure de filière (22) appliquée sur le côté avant de celle-ci et comprenant la lèvre de filière (20), laquelle partie antérieure peut être déplacée au moyen du dispositif de réglage par rapport à la partie postérieure de filière (21) en changeant l'ampleur de l'ouverture de sortie de la fente d'extrusion.

3. Filière d'extrusion selon la revendication 2, **caractérisée en ce que** la rainure de réception (211) destinée à recevoir là barre de réglage (4) est configurée dans la partie postérieure de filière (21) et est ouverte en direction de la partie antérieure de filière (22).

4. Filière d'extrusion selon une des revendications 1 à 3, **caractérisée en ce que** les cames coulissantes (40) sont fixées latéralement au-dessus de la barre de réglage (4) en surplomb de celle-ci et chaque came coulissante (40) est guidée dans une rainure pilote (220) de la partie de filière.

5. Filière d'extrusion selon la revendication 3 ou 4, **caractérisée en ce que** les rainures pilotes (220) destinées à recevoir les cames coulissantes (40) de la barre de réglage (4) dans la partie antérieure de filière (22) sont configurées sur le côté adjacent à la partie postérieure de filière (21).

6. Filière d'extrusion selon la revendication 3, **caractérisée en ce que** la barre de réglage (4) est configurée avec des rainures pilotes dans lesquelles s'engagent des cames coulissantes en surplomb de manière correspondante sur la partie antérieure de filière (22) ou la partie postérieure de filière (21).

7. Filière d'extrusion selon une des revendications 1 à 6, **caractérisée en ce que** la partie de filière présentant le dispositif de réglage présente une lèvre de filière disposée de manière souplément flexible sur celle-ci et une flexion de la lèvre de filière peut être effectuée au moyen du dispositif de réglage avec changement de l'ampleur de l'ouverture de sortie de la fente d'extrusion.

8. Filière d'extrusion selon une des revendications 1 à 7, **caractérisée en ce que** les chaînes à rouleaux (5, 6) sont configurées de manière à circuler sans fin.

9. Filière d'extrusion selon une des revendications 1 à 8, **caractérisée en ce que** les chaînes à rouleaux (5, 6) comprennent respectivement une pluralité de rouleaux (52) montés de manière rotative avec des tourillons (520) et les rouleaux sont reliés au moyen de membres latéraux (500, 51).

10. Filière d'extrusion selon la revendication 9,
**caractérisée en ce qu'**il est prévu dans la région entre rouleaux (52) voisins, un pont de liaison reliant les membres latéraux (500) de la chaîne à rouleau (5, 6).

11. Filière d'extrusion selon une des revendications 1 à 10, **caractérisée en ce que** les chaînes à rouleau (5, 6) sont fabriquées en acier trempé.

12. Filière d'extrusion selon une des revendications 1 à 11, **caractérisée en ce que** l'ampleur de l'ouverture de sortie de la fente d'extrusion peut être réglée jusqu'à un maximum de 12 mm.
